# EUROPÄISCHE PATENTSCHRIFT

(11) **EP 1 007 867 B1**
(45) Veröffentlichungstag und Bekanntmachung des Hinweises auf die Patenterteilung: **02.01.2003**
(21) Anmeldenummer: 99941407.1
(22) Anmeldetag: 30.06.1999
(51) Int. Cl.: F16H 1/00

(54) **SCHALTHEBEL MIT SPERRSTANGE**
GEARSHIFT LEVER WITH BLOCKING ROD
LEVIER DE CHANGEMENT DE VITESSES AVEC TIGE DE BLOCAGE

(30) Priorität: 30.06.1998 DE 19829173
(43) Veröffentlichungstag der Anmeldung: 14.06.2000
(73) Patentinhaber: ZF Lemförder Metallwaren AG, 49448 Lemförde (DE)
(72) Erfinder: ERSOY, Metin, D-65396 Walluf (DE); KLINGENBURG, Erich, D-49439 Steinfeld (DE); RIX, Joerg, D-25451 Quickborn (DE)
(86) Internationale Anmeldenummer: DE9901889
(87) Internationale Veröffentlichungsnummer: WO00001959

(56) Entgegenhaltungen:
- EP-A- 0 695 663
- DE-C- 19 513 809
- JP-A- 60 039 222

## Beschreibung

Die Erfindung betrifft einen Schalthebel für ein Automatikgetriebe in einem Kraftfahrzeug mit einer am Schalthebel axial beweglich geführten Sperrstange gemäß dem Oberbegriff des Anspruches 1.

Bekannt sind beispielsweise Schalthebel mit einer als Zugstange ausgebildeten Sperrstange, die axial beweglich in einem Schalthebel geführt ist, so daß die Sperrstange durch eine Handbetätigung des Sperrknopfes gezogen werden muß. So geht aus DE 25 30 784 A1 eine Schaltvorrichtung hervor, bei der eine an der Unterseite des Schalthebelgriffes, im Griff schwenkbeweglich angeordnete Taste als Betätigungseinrichtung dient, die über ein Koppelelement in eine Durchbrechung der Sperrstange eingreift. Durch Betätigung der Taste wird diese in den Griff eingeschwenkt, wodurch die Sperrstange über das Koppelglied in dem hohl ausgebildeten Schalthebel angehoben wird.

Aus DE 43 42 460 A1 geht eine Schalthebelbaugruppe hervor, die ein rohrförmiges Hebelbauteil besitzt, an dessen oberen Ende ein Griffteil vorgesehen ist, das einen Betätigungsknopf aufweist, der in einem Hohlraum des Griffteiles drehbar angeordnet ist. Dieser Betätigungsknopf wirkt mit einem federbelasteten Betätigungsstab zusammen, der den Betätigungsknopf nach oben vorspannt. Durch eine Bedienungsperson muß der Betätigungsknopf in axialer Richtung soweit entgegen der Federkraft bewegt werden, bis eine Rastung den Betätigungsknopf in einer bestimmten Position arretiert. Die Schaltvorgänge des Kraftfahrzeuggetriebes werden nunmehr möglich. Bei einer derartigen Ausführung ist der Betätigungsstab als Druckstange ausgebildet.

Aus EP 0 625 656 A1 ist ferner eine Schaltvorrichtung für ein Kraftfahrzeuggetriebe bekannt, deren Betätigungsstange als Druckstange ausgebildet ist. In dem Griffstück, das am oberen Ende eines hohl ausgebildeten Schalthebels angebracht ist, befindet sich ein Knopf, dessen axiale Verlängerung am Ende mit einer Schrägfläche versehen ist. Wird der Knopf in axialer Richtung in das Griffstück hinein bewegt, so wirkt die endseitige Schrägfläche gegen eine komplementäre Schrägfläche am oberen Ende der Betätigungsstange. Die Betätigungsstange wird auf diese Weise in axialer Richtung nach unten geführt, bis ein Rastmechanismus sie in der gewünschten Position hält, so daß die Schaltvorgänge am Getriebe möglich werden.

Die EP 0 695 663 A1 beschreibt einen Wählhebel für ein Kraftfahrzeuggetriebe, bei dem über eine Drucktaste ein Rastelement bewegt werden kann, so daß sich der Wählhebel in verschiedene Positionen verstellen läßt. Die Zurückstellung des Rastelements erfolgt gedämpft über einen Viskosedämpfer.

Die JP 60 39222 A zeigt einen Schalthebel mit einer im Schalthebel axial geführten Stange und einem am oberen Ende des Schalthebels angeordneten Knauf, der ein Betätigungselement quer zu Stange verschiebbar aufnimmt.

Weiterhin ist aus der den Oberbegriff bildenden DE 195 13 809 C1 ein Schalthebel bekannt, der einen am oberen Ende des Schalthebels angeordneten Knauf, eine am Schalthebel axial geführte Sperrstange und von Hand bewegliche Mittel zur Betätigung der Sperrstange relativ zum Schalthebel aufweist, wobei zwei der Mittel über eine ineinander greifende Verzahnung verfügen und diese Mittel derart angeordnet sind, daß eine Annäherung eines der Mittel an die Sperrstange eine axiale Bewegung der Sperrstange hervorruft. Bei diesem Stand der Technik sind beim Betätigen der Sperrstange die initialen Kräfte zur Betätigung der Sperrstange relativ hoch, so daß am Anfang sehr große Daumenkräfte zur Betätigung der Schaltung erforderlich werden. Hierdurch entsteht das Gefühl einer hackligen Schaltung, deren Kraftverläufe unphysiologisch ausgestaltet sind. Im übrigen ist eine derartige Schaltung relativ aufwendig in der Herstellung.

Es ist Aufgabe der Erfindung einen weiteren Schalthebel für ein Automatikgetriebe eines Kraftfahrzeuges darzustellen, der die obengenannten Nachteile des Standes der Technik vermeidet und eine verbesserte Kraftübertragung bei der Betätigung der Sperrvorrichtung des Schalthebels aufweist.

Erfindungsgemäß wird eine Schalthebel mit den Merkmalen nach Anspruch 1 geschaffen.

Demgemäß wird der Schalthebel für ein Automatikgetriebe in einem Kraftfahrzeug mit einer am Schalthebel axial geführten Sperrstange und einem am oberen Ende des Schalthebels angeordneten Knauf, der ein Betätigungselement quer zu der Sperrstange verschiebbar aufnimmt, das zum Hervorrufen einer axialen Bewegung der Sperrstange von Hand relativ zum Schalthebel beweglich ist, dahingehend weiterentwickelt, daß das Betätigungselement und ein mit der Sperrstange an seinem einen Ende schwenkbar verbundenes Zahnsegment ineinandergreifende Verzahnungen aufweisen, wobei zumindest eine der beiden Verzahnungen entlang einer Kurve auf einem Ellipsenabschnitt verläuft.

Mit diesem erfindungsgemäßen Schalthebel wird erreicht, daß die erforderlichen Kräfte zur Betätigung der Sperrstange am Anfang niedrig sind und im späteren Verlauf der Bewegung einen höheren Wert annehmen.

Gemäß einer konkreten Ausgestaltung der Erfindung weist das Betätigungselement einen im rechten Winkel zur Achse der Sperrstange beweglichen Drucknopf mit der anderen der beiden Verzahnungen auf der Innenseite - das heißt der zur Sperrstange hin ausgerichteten Seite - auf. Weiterhin kann das Zahnsegment an seinem anderen Ende ein ellipsenförmiges Segment mit der zumindest einen Verzahnung aufweisen, die in eine vorzugsweise linear verlaufende Verzahnung des Drucknopfes eingreift und bei einer linearen Bewegung des Drucknopfes zu einer Anhebung der Sperrstange führt. Die einerseits lineare Verzahnung des Drucknopfes bewirkt in Wechselwirkung mit dem ellipsensegmentförmigen Verlauf der Verzahnung des Zahnsegments, das auf einer Seite mit der Sperrstange schwenkbar verbunden ist, einen optimalen Verlauf der Kraftübertragung zwischen der linearen Bewegung des Drucknopfes und der Sperrstange, die zu einer angenehmen, leichtgängigen und ruckfreien Betätigung der Sperrstange führt. Die aufzuwendenden Kräfte für die Bestätigung des Drucknopfes und damit der Sperrstange sind zu Beginn aufgrund der günstigen Übersetzung sehr niedrig und wachsen kontinuierlich mit dem Fortschritt der Bewegung an. Dies führt zu einer biomechanisch angenehmen Betätigung der mit der Sperrstange verbundenen Sperrvorrichtung.

Weitere Ausgestaltungen der Erfindungen sind in den Unteransprüchen zu Anspruch 1 und in der nachfolgenden Figurenbeschreibung dargestellt.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispieles unter Bezugnahme auf die Zeichnungen.
- Figur 1:: Schalthebel mit Drucknopf in Ruhestellung;
- Figur 2:: Schalthebel mit Drucknopf in Endstellung.

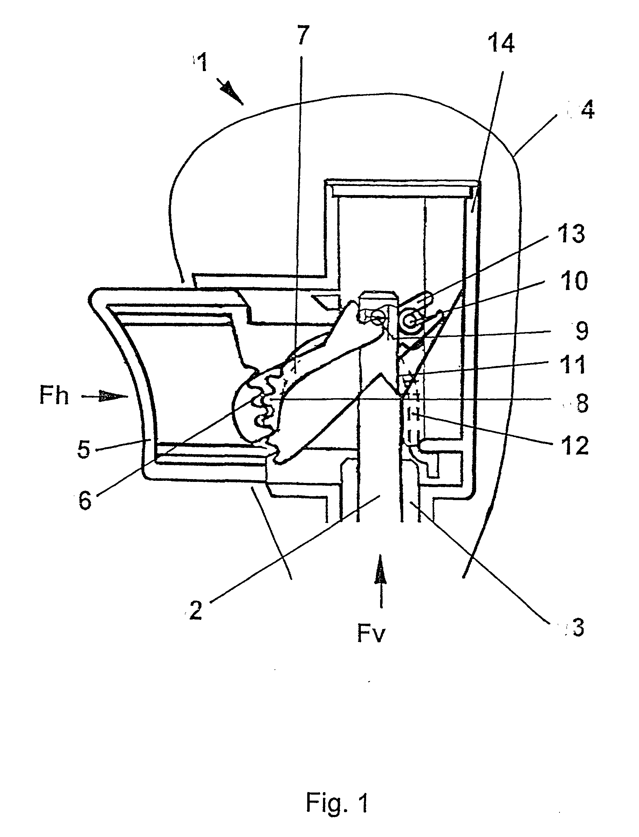

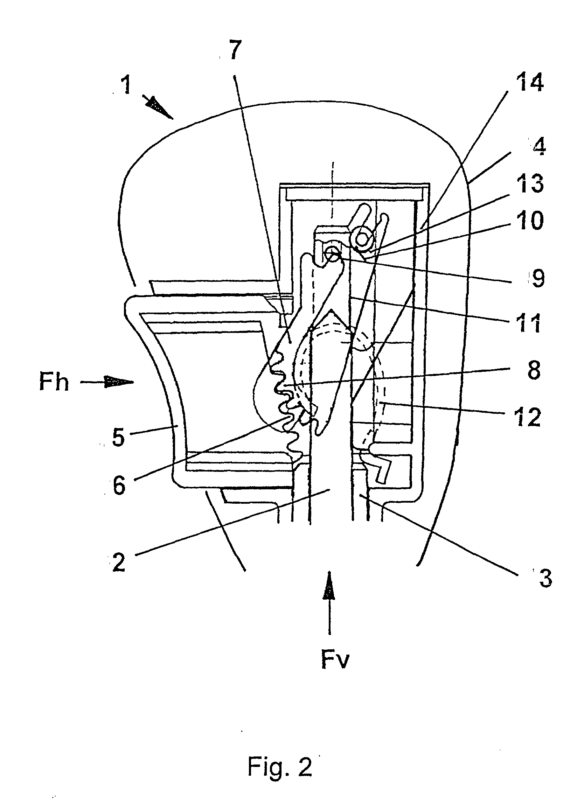

In der Figur 1 ist der Drucknopf 5 in Ruhestellung dargestellt, während in der Figur 2 der Drucknopf 5 in seiner Endstellung gezeigt ist.

Der Schalthebel 1 verfügt über einen Knauf 4, in dem sich eingebettet ein Knaufeinsatz 14 befindet, der über zwei rechtwinklig zueinander stehende Öffnungen verfügt. Die untere Öffnung nimmt die Führung 3 für die Sperrstange 2 auf, während die obere rechtwinklig dazu stehende Öffnung den darin linear verschiebbaren Drucknopf 5 aufnimmt. Der Drucknopf 5 verfügt an seiner Rückseite über eine Verzahnung 6, deren Verlauf bei der gezeigten Ausführungsform linear ist. In diese Verzahnung 6 des Drucknopfes 5 greift die Verzahnung 8 des elliptischen Zahnsegments 7 ein. Das elliptische Zahnsegment 7 ist an seinem rechten Ende über die Schwenkachse 9 schwenkbar mit der axial beweglichen Sperrstange 2 verbunden.
Zusätzlich ist auf der gegenüberliegenden Seite des Drucknopfes 5 im Knaufeinsatz eine Rolle 10 vorgesehen, die in einer Rollenhalterung 13 axial gelagert ist. Die Rolle 10 stützt die Sperrstange 2 gegenüber der senkrecht zur Achse der Sperrstange wirkenden Kraftkomponente des Drucknopfes 5 ab.

Des weiteren ist eine mit dem elliptischen Zahnsegment 7 zusammenwirkende Feder 12 vorgesehen, die sich auf der rechten Seite gegenüber dem Knaufeinsatz 14 abstützt. Diese Feder 12 dient einerseits dazu, beim Zusammenbau der Vorrichtung das elliptische Zahnsegement 7 in seiner Position zu halten, während der Drucknopf 5 eingesetzt wird. Andererseits hält die Feder 12 das elliptische Zahnsegment auch in seiner Ruhestellung und bewirkt eine federnde Rückstellkraft des elliptischen Zahnsegments zur Ruhestellung hin. Wird der Drucknopf 5 aus seiner Ruhestellung, die in Figur 1 dargestellt ist, linear in Richtung auf die Sperrstange zu bewegt, so entstehen Hebelkräfte über das in der Verzahnung eingreifende elliptische Zahnsegment auf die Sperrstange 2, die eine axiale Hubbewegung der Sperrstange 2 in der Führung 3 erzeugen. Die nicht axial verlaufende Kraftkomponente, die durch den Druck des Drucknopfes 5 über das Zahnsegement 7 auf die Sperrstange 2 übertragen werden, wird von der Rolle 10 abgefangen, so daß sich für die Zugstange eine ausschließlich axiale Bewegung ergibt. Aufgrund des elliptischen Verlaufs der Verzahnung am Zahnsegment ergeben sich unterschiedlich große Hebelarme und damit eine unterschiedlich große Übersetzung in Abhängigkeit von der Position des Drucknopfes 5. Zu Beginn der Bewegung aus der Ruhestellung heraus ist die Kraftübersetzung (Fv/Fh) - das Verhältnis der vertikalen erzeugten Kraft zur horizontal wirkenden Kraft - in der Ruhestellung (Figur 1) größer als in der Endstellung (Figur 2). Bei dem hier benutzten elliptischen Zahnsegment reduziert sich die Kraftübersetzung kontinuierlich von der Anfangsstellung bis zur Endstellung.

Somit wird mit dieser erfindungsgemäßen Ausführung eines Schalthebels erreicht, daß die Betätigungskräfte des Drucknopfes der Biomechanik der betätigenden Hand entgegenkommt und ein angenehmer Kraftverlauf bei der Betätigung der Sperrstange entsteht.

### Bezugszeichenliste:

- 1: Schalthebel
- 2: Sperrstange
- 3: Führung
- 4: Knauf
- 5: Druckknopf
- 6: Verzahnung am Druckknopf
- 7: elliptisches Zahnsegment
- 8: Verzahnung am elliptischen Zahnsegment
- 9: Schwenkachse
- 10: Rolle
- 11: Rückseite der Sperrstange
- 12: Feder
- 13: Rollenhalterung
- 14: Knaufeinsatz

## Patentansprüche

1. Schalthebel (1) für ein Automatikgetriebe in einem Kraftfahrzeug mit einer am Schalthebel (1) axial geführten Sperrstange (2) und einem am oberen Ende des Schalthebels (1) angeordneten Knauf (4), der ein Betätigungselement (5) quer zu der Sperrstange (2) verschiebbar aufnimmt, das zum Hervorrufen einer axialen Bewegung der Sperrstange (2) von Hand relativ zum Schalthebel (1) beweglich ist, **dadurch gekennzeichnet, daß**
das Betätigungselement (5) und ein mit der Sperrstange (2) an seinem einen Ende schwenkbar verbundenes Zahnsegment (7) ineinandergreifende Verzahnungen (6, 8) aufweisen, wobei zumindest eine der beiden Verzahnungen (8) entlang einer Kurve auf einem Ellipsenabschnitt verläuft.

2. Schalthebel gemäß Anspruch 1, **dadurch gekennzeichnet, daß** die andere der beiden Verzahnungen (6) linear verläuft.

3. Schalthebel gemäß Anspruch 1 oder 2, **dadurch gekennzeichnet, daß** das Betätigungselement (5) einen im rechten Winkel zur Achse der Sperrstange (2) beweglichen Druckknopf mit der anderen der beiden Verzahnungen (6) auf der Innenseite aufweist.

4. Schalthebel gemäß Anspruch 3, **dadurch gekennzeichnet, daß** das Schwenkbare Zahnsegment (7) an seinem anderen Ende den Ellipsenabschnitt, mit der zumindest einen Verzahnung (8) aufweist.

5. Schalthebel gemäß einem der Ansprüche 1 bis 4, **dadurch gekennzeichnet, daß** der wirksame Hebelarm, der die axiale Bewegung der Sperrstange (2) bewirkt, zu Beginn der Axialbewegung der Sperrstange (2) größer ist, als zum Ende der Bewegung.

6. Schalthebel gemäß Anspruch 5, **dadurch gekennzeichnet, daß** der wirksame Hebelarm kontinuierlich mit der Betätigung der Sperrstange (2) abnimmt.

7. Schalthebel gemäß einem der Ansprüche 1 bis 4, **dadurch gekennzeichnet, daß** die wirksame Übersetzung (Fv/Fh) zwischen der linearen Annäherungsbewegung des Betätigungselements (5) zur Betätigung der Sperrstange (2) an die Sperrstange (2) und der axialen Bewegung der Sperrstange (2) zu Beginn der Bewegung kleiner ist als zum Ende der Bewegung.

8. Schalthebel gemäß Anspruch 7, **dadurch gekennzeichnet, daß** die Übersetzung kontinuierlich mit der Betätigung der Sperrstange zunimmt.

9. Schalthebel gemäß einem der Ansprüche 1 bis 8, **dadurch gekennzeichnet, daß** eine Führung (3) für die Sperrstange (2) vorgesehen ist.

10. Schalthebel gemäß einem der Ansprüche 1 bis 9, **dadurch gekennzeichnet, daß** eine Rolle (10) vorgesehen ist, die senkrecht zur Sperrstange (2) wirksame Kräfte abfängt.

11. Schalthebel gemäß einem der Ansprüche 1 bis 10, **dadurch gekennzeichnet, daß** eine Feder (12) vorgesehen ist, die eine Rückstellkraft für das Betätigungselement (5) und das Zahnsegment (7) bewirkt.

12. Schalthebel gemäß Anspruch 11, **dadurch gekennzeichnet, daß** die Feder (12) das Zahnsegment (7) bei der Montage festhält, bis das Betätigungselement (5) eingesetzt ist.

## Claims

1. Gearshift lever (1) for an automatic transmission in a motor vehicle, having a locking rod (2) which is axially guided on the said gearshift lever (1), and a knob (4) which is disposed on the upper end of the gearshift lever (1) and receives an actuating element (5) in a manner displaceable transversely to the said locking rod (2), which actuating element can be moved manually, relative to the gearshift lever (1), for the purpose of bringing about an axial movement of the locking rod (2), **characterised in that**
the actuating element (5), and a toothed segment (7) which is pivotably connected to the locking rod (2) at one end of the said element, have toothing systems (6, 8) which engage in one another, at least one of the two toothing systems (8) extending along a curve on an ellipse segment.

2. Gearshift lever according to claim 1, **characterised in that** the other of the two toothing systems (6) extends in a linear manner.

3. Gearshift lever according to claim 1 or 2, **characterised in that** the actuating element (5) has a press-button which is movable at right angles to the axis of the locking rod (2) and which has the other of the two toothing systems (6) on the inner side.

4. Gearshift lever according to claim 3, **characterised in that** the pivotable toothed segment (7) has, at its other end, the ellipse segment having the at least one toothing system (8).

5. Gearshift lever according to one of claims 1 to 4, **characterised in that** the effective lever arm which gives rise to the axial movement of the locking rod (2) is larger at the beginning of the said axial movement of the locking rod (2) than at the end of the movement.

6. Gearshift lever according to claim 5, **characterised in that** the effective lever arm decreases continuously with actuation of the locking rod (2).

7. Gearshift lever according to one of claims 1 to 4, **characterised in that** the effective transmission ratio (Fv/Fh) between the linear movement of approach of the actuating element (5) for actuating the locking rod (2) to the said locking rod (2), and the axial movement of the latter is smaller at the beginning of the movement than at the end of the movement.

8. Gearshift lever according to claim 7, **characterised in that** the transmission ratio increases continuously with actuation of the locking rod.

9. Gearshift lever according to one of claims 1 to 8, **characterised in that** a guide (3) is provided for the locking rod (2).

10. Gearshift lever according to one of claims 1 to 9, **characterised in that** a roller (10) is provided, which absorbs the forces which are operative perpendicularly to the locking rod (2).

11. Gearshift lever according to one of claims 1 to 10, **characterised in that** a spring (12) is provided, which gives rise to a restoring force for the actuating element (5) and the toothed segment (7).

12. Gearshift lever according to claim 11, **characterised in that** the spring (12) holds the toothed segment (7) fast during assembly, until the actuating element (5) is inserted.

## Revendications

1. Levier de changement de vitesses (1) pour une boîte automatique dans un véhicule automobile, avec une tige de verrouillage (2) guidée axialement sur le levier de changement de vitesses (1) et un pommeau (4), disposé à l'extrémité supérieure du levier de changement de vitesses (1) et logeant un élément d'actionnement (5) de manière à pouvoir coulisser transversalement à la tige de verrouillage (2), élément qui est mobile pour produire manuellement un déplacement axial manuel de la tige de verrouillage (2) par rapport au levier de changement de vitesses (1), **caractérisé en ce que** l'élément d'actionnement (5) et un segment denté (7) assemblé à une de ses extrémités à pivotement à la tige de verrouillage (2) présentent des dentures (6, 8) en prise mutuelle, au moins l'une (8) des deux dentures s'étendant le long d'une courbe sur un segment d'ellipse.

2. Levier de changement de vitesses selon la revendication 1, **caractérisé en ce que** l'autre (6) des deux dentures s'étend linéairement.

3. Levier de changement de vitesses selon la revendication 1 ou 2, **caractérisé en ce que** l'élément d'actionnement (5) présente un bouton-poussoir, mobile à angle droit de l'axe de la tige de verrouillage (2) et pourvu sur le côté intérieur de l'autre (6) des deux dentures.

4. Levier de changement de vitesses selon la revendication 3, **caractérisé en ce que** le segment denté pivotant (7) présente à son autre extrémité le segment d'ellipse pourvu de ladite au moins une denture (8).

5. Levier de changement de vitesses selon l'une quelconque des revendications 1 à 4, **caractérisé en ce que** le bras de levier actif qui produit le déplacement axial de la tige de verrouillage (2) est plus important au début du déplacement axial de la tige de verrouillage (2) qu'à la fin de ce déplacement.

6. Levier de changement de vitesses selon la revendication 5, **caractérisé en ce que** le bras de levier actif diminue en continu avec l'actionnement de la tige de verrouillage (2).

7. Levier de changement de vitesses selon l'une quelconque des revendications 1 à 4, **caractérisé en ce que** la démultiplication active (Fv/Fh) entre le mouvement linéaire d'approche de l'élément d'actionnement (5) de la tige de verrouillage (2) afin d'actionner la tige de verrouillage (2) et le déplacement axial de la tige de verrouillage (2) est moindre au début du déplacement qu'à la fin du déplacement.

8. Levier de changement de vitesses selon la revendication 7, **caractérisé en ce que** la démultiplication augmente en continu avec l'actionnement de la tige de verrouillage.

9. Levier de changement de vitesses selon l'une quelconque des revendications 1 à 8, **caractérisé en ce qu'**il est prévu un guide (3) pour la tige de verrouillage (2).

10. Levier de changement de vitesses selon l'une quelconque des revendications 1 à 9, **caractérisé en ce qu'**il est prévu un galet (10) qui intercepte les forces actives perpendiculairement à la tige de verrouillage (2).

11. Levier de changement de vitesses selon l'une quelconque des revendications 1 à 10, **caractérisé en ce qu'**il est prévu un ressort (12) qui produit une force de rappel pour l'élément d'actionnement (5) et le segment denté (7).

12. Levier de changement de vitesses selon la revendication 11, **caractérisé en ce que** le ressort (12) maintient le segment denté (7) lors du montage, jusqu'à ce que l'élément d'actionnement (5) soit installé.
